(19) Europäisches Patentamt
European Patent Office
Office européen des brevets

(11) **EP 4 700 866 A1**

(12) **EUROPEAN PATENT APPLICATION**
published in accordance with Art. 153(4) EPC

(43) Date of publication:
**25.02.2026 Bulletin 2026/09**

(51) International Patent Classification (IPC):
***H01M 4/587*** (2010.01)

(21) Application number: 24927683.3

(22) Date of filing: **09.08.2024**

(86) International application number:
**PCT/CN2024/111082**

(87) International publication number:
**WO 2025/260472 (26.12.2025 Gazette 2025/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.06.2024 CN 202410783738**

(71) Applicant: **ZHEJIANG LIWINON ENERGY TECHNOLOGY CO., LTD.**
**Jinhua, Zhejiang 321102 (CN)**

(72) Inventors:
• **GUO, Yafang**
**Jinhua, Zhejiang 321102 (CN)**
• **LI, Fuhai**
**Jinhua, Zhejiang 321102 (CN)**

(74) Representative: **Zoli, Filippo**
**Brunacci & Partners S.r.l.**
**Via Pietro Giardini, 625**
**41125 Modena (IT)**

(54) **NEGATIVE ELECTRODE ACTIVE MATERIAL, NEGATIVE ELECTRODE SHEET, AND LITHIUM-ION BATTERY**

(57)     A negative electrode active material, a negative electrode sheet, and a lithium-ion battery are disclosed. The negative electrode active material comprises primary particles and secondary particles; a mass percentage t of the primary particles is not more than 30%; a particle size Dv90 of the primary particles is 13 $\mu$m to 20 $\mu$m, a particle size Dv'90 of the secondary particles is 18 $\mu$m to 26 $\mu$m and greater than the particle size Dv90 of the primary particles. The primary particles exhibit high capacity and initial efficiency but poor charging and swelling characteristics. Conversely, the secondary particles exhibit opposite characteristics. By combining the primary and secondary particles according to a certain ratio and relative particle sizes, the charging performance and energy density can be balanced. Additionally, by oxidizing the surfaces of both primary and secondary particles, the low crystalline regions are removed, thereby enhancing overall capacity and compaction level.

EP 4 700 866 A1

**Description**

**TECHNICAL FIELD**

The present disclosure belongs to the technical field of lithium-ion batteries, and in particular relates to a negative electrode active material, a negative electrode sheet, and a lithium-ion battery.

**BACKGROUND**

With the depletion of fossil fuel resources and the increasingly severe environmental and ecological issues, there is a growing pursuit for cleaner and more environmentally friendly energy sources. Lithium-ion batteries have garnered increasing attention due to their high energy density and high power density. Nowadays, lithium-ion batteries are widely used in our daily lives, such as in portable electronic products like laptops and mobile phones, as well as in electric vehicles. These products impose increasingly stringent requirements on the energy density and high-temperature performance of lithium-ion batteries, and the energy density of lithium-ion batteries are significantly influenced by the active materials.

Moreover, different active materials, particularly graphite, exhibit considerable variation in the discharge capacity at different temperatures, which directly affects the available capacity, i.e., the actual energy density of the battery cell. This difference in discharge capacity is often related to the activity of the lithium intercalation/deintercalation reaction within the battery cell. However, the activity of the lithium intercalation/deintercalation reaction conflicts with high-temperature performance, as high internal reaction activity leads to more vigorous reactions at high temperatures, which can cause side reactions such as the decomposition of the SEI film on the negative electrode surface, resulting in severe gas generation and failure issues. Therefore, it is necessary to improve the energy density of the negative electrode active materials while ensuring its high-temperature performance.

**SUMMARY**

The present disclosure aims at solving at least one of the technical problems existing in the prior art described above. Therefore, the present disclosure provides a negative electrode active material, a negative electrode sheet, and a lithium-ion battery. The lithium-ion battery made from this negative electrode active material exhibits both high energy density and high-temperature performance.

The first aspect of the present disclosure provides a negative electrode active material comprising primary particles and secondary particles;

wherein a mass percentage t of the primary particles in a total mass of the primary particles and the secondary particles is not more than 30%;

a particle size Dv90 of the primary particles ranges from 13 $\mu$m to 20 $\mu$m, and a particle size Dv'90 of the secondary particles ranges from 18 $\mu$m to 26 $\mu$m, and greater than the particle size Dv90 of the primary particles.

The negative electrode active material according to the first aspect of the present disclosure has the following beneficial effects.

The primary particles exhibit high capacity and initial efficiency but poor charging and swelling characteristics. Conversely, the secondary particles exhibit opposite characteristics. Therefore, in the present solution, the primary particles and secondary particles are combined according to a certain ratio and relative particle sizes, so as to balance charging performance and energy density. Specifically, the ratio and relative particle sizes of the primary and secondary particles also affect the compatibility between the two. Through the aforementioned limitations, the lithium intercalation/deintercalation capability is further enhanced, and the occurrence of side reactions is reduced, thereby effectively increasing the energy density of the battery and improving the high-temperature performance thereof.

The primary particles refer to particles of powder that can be separated and exist independently, which can be single crystal particles or polycrystalline particles. The secondary particles refer to those particles formed by the aggregation of primary particles in some manner. For example, the secondary particles can be formed from single crystals or polycrystals of the corresponding compounds through one or more physical or chemical reactions including decomposition, roasting, reduction, replacement, combination, etc., and through phase transitions or crystal transitions. Alternatively, the secondary particles can be formed by high-temperature treatment of primary particles such as calcination, annealing, sintering, etc. These secondary particles are aggregate particles or agglomerate particles. Furthermore, the secondary particles can also be formed by the granulation or flocculation of primary particles aggregate.

Particle size refers to the size of particles expressed in terms of diameter. For spherical particles, the particle size refers to the diameter of the particles. For irregularly particles, the particle size is typically the equivalent diameter of the particles, such as any one of the volume-equivalent diameter and the projected area diameter, etc. D90, also known as the coarse end particle size, refers to the particle size corresponding to cumulative particle size distribution percentage reaching 90% in a sample, and the cumulative particle size distribution refers to the percentage of particles smaller than a certain particle size relative to all particles (e.g., the percentage in terms of mass, volume, number, etc.). Methods for measuring particle size include any one of sieving, microscopy, sedimentation, electronic sensor methods, laser, and acoustic spectroscopy methods. Typically, the particle size of the negative electrode active material can be measured using the laser method, for example, a laser particle size analyzer is used to measure the particle sizes of the primary and secondary particles. Depending on the measurement type of particle size distribution, the particle size can be categorized into intensity distribution Di90, volume distribution Dv90, and number distribution Dn90, with testing standards referenced from "Particle Size Distribution-Laser Diffraction Method" (GB/T 19077-2016).

In some embodiments of the present disclosure, an OI value r of the negative electrode active material satisfies 6 < r < 17.

The OI value represents the orientation degree of the negative electrode active material, particularly graphite-based negative electrode active materials, specifically refers to the ratio of the peak intensity of the (004) crystal plane to that of the (110) crystal plane. Since the (110) crystal plane is parallel to the Z-axis and the (004) crystal plane is perpendicular to the Z-axis, the ratio of the peak intensities of these two crystal planes can be used to characterize the isotropy of the negative electrode active material. The OI value is defined as $OI = I(004)/I(110)$, where I represents the peak intensity of the crystal plane, which can be obtained at least through X-ray Diffraction (XRD). The sample used for testing can be the negative electrode active material or the negative electrode sheet formed from this negative electrode active material.

A smaller OI value indicates a better isotropy, with end faces in all directions that increase lithium ion transport ports. A larger OI value indicates a poorer isotropy, a clear orientation of the negative electrode active material, a limited port direction and a reduced rapid intercalation capability of lithium ions.

In some embodiments, a mass percentage H of a surface oxygen content of the negative electrode active material satisfies $200H/Dv90 + 10/r < 3.2$, where Dv90 is a dimensionless value without a unit of $\mu$m when calculated.

Surface oxygen content refers to a proportion of the amount of oxygen elements on the surface of particles at the nanometer to micrometer scale relative to the total amount of all elements, typically expressed as a mass percentage. Surface oxygen content can be measured using methods such as Energy Dispersive X-Ray Spectroscopy (EDX), Auger Electron Spectroscopy (AES), X-ray Photoelectron Spectroscopy (XPS), Time of Flight-Secondary Ion Mass Spectrometry (TOF-SIMS). Different methods correspond to different surface detection depths. For example, TOF-SIMS can detect an oxygen content at a 1 nm surface depth of particles, XPS can detect an oxygen content at a 3-10 nm surface depth of particles, AES can detect an oxygen content at a 1-5 nm surface depth of particles, and EDX can detect an oxygen content at a 10 nm-3 $\mu$m surface depth of particles. In the examples of the present disclosure, XPS is generally used to detect the surface oxygen content of the primary and secondary particles.

Surface oxygen content indicates the oxidation degree of the negative electrode active material. After oxidation, the low crystalline regions of primary or secondary particles may be etched away, resulting in improved overall gram capacity and compaction level. Furthermore, oxidation etching may create certain pores, which can provide more transport ports for lithium ions, enhance the kinetic performance and allow for more lithium ions to be intercalated and deintercalated during charging and discharging.

In the examples of the present disclosure, the discharge capacity difference of the negative electrode active material is characterized by the temperature coefficient, which is the ratio of the discharge capacity at room temperature to that at 45 °C. The temperature coefficient is related to the reaction activity of lithium intercalation/deintercalation within the battery cell. The greater the reaction activity of lithium intercalation/deintercalation, the higher the temperature coefficient.

Regarding the three characteristics mentioned in the above formula, a smaller OI value indicates a better isotropy, with end faces in all directions that increase lithium ion transport ports, while a larger OI value indicates a poorer isotropy, a clear orientation of the negative electrode active material, a limited port direction and a reduced rapid intercalation capability of lithium ions. A smaller particle size of the primary particles results in a shorter lithium ion diffusion path, which is beneficial for lithium ion intercalation. However, if the particle size is too small, the specific surface area will significantly increase, leading to more side reactions. Oxidation etching can increase the surface porosity of the particles, which provides more transport ports for lithium ions, enhances the kinetic performance, allows for more lithium ions to be intercalated and deintercalated during charging and discharging, and enhances the reaction activity of the lithium intercalation/deintercalation, thereby effectively enhancing the temperature coefficient. However, etching increases the specific surface area, and combined with the high specific surface area of primary particles with small particle sizes, it will significantly increase side reactions and deteriorates high-temperature storage performance.

Therefore, when the particle size Dv90 and the OI value of the primary particles cooperate and satisfy the above conditions, it is possible to avoid severe side reaction problems caused by using primary particles with small particle size under low OI and high oxidation etching conditions, and significantly improve the temperature coefficient while ensuring that high-temperature storage performance is not deteriorated.

In some embodiments of the present disclosure, a mass percentage H1 of a surface oxygen content of the primary particles ranges from 0% to 10%. For example, a mass percentage H1 of the surface oxygen content of the primary particlesis 0%, 1%, 2%, 3%, 4%, 5%, 6%, 7%, 8%, 9%, or 10%.

In some embodiments of the present disclosure, a mass percentage H2 of a surface oxygen content of the secondary particles ranges from 5% to 15%. For example, a mass percentage H2 of the surface oxygen content of the primary particles is 5%, 6%, 7%, 8%, 9%, 10%, 11%, 12%, 13%, 14%, or 15%.

In some embodiments of the present disclosure, the mass percentage H of the surface oxygen content of the negative electrode active material ranges from 4% to 15%. For example, the mass percentage H of the surface oxygen content of the negative electrode active materialis 4%, 5%, 6%, 7%, 8%, 9%, 10%, 11%, 12%, 13%, 14%, or 15%.

The primary particles have a small particle size and singular lithium intercalation end face. Oxidation processes can increase the transport ports for lithium ions. However, excessive oxidation etching can increase the defect levels of small particles, thereby exacerbating side reactions. The secondary particles inherently possess more lithium intercalation ports and good charging capabilities. However, the gram capacity of the secondary particles is reduced due to the presence of binders. Therefore, increasing the oxidation degree can significantly decrease the low crystalline regions, further enhancing the gram capacity of the secondary particles, thereby increasing the overall energy density of the negative electrode active material. However, excessive etching and oxidation can cause the port structures to collapse, hindering the intercalation and deintercalation of lithium ions, and deteriorating the temperature coefficient.

In some embodiments of the present disclosure, the mass percentage t of the primary particles is 30%, 29%, 28%, 27%, 26%, 25%, 24%, 23%, 22%, 21%, 20%, 19%, 18%, 17%, 16%, 15%, 14%, 13%, 12%, 11%, 10%, 9%, 8%, 7%, 6%, 5%, 4%, 3%, 2%, or 1%.

In some embodiments of the present disclosure, the particle size Dv90 of the primary particles is 13 $\mu$m, 14 $\mu$m, 15 $\mu$m, 16 $\mu$m, 17 $\mu$m, 18 $\mu$m, 19 $\mu$m, or 20 $\mu$m.

In some embodiments of the present disclosure, the particle size Dv'90 of the secondary particles is 18 $\mu$m, 19 $\mu$m, 20 $\mu$m, 21 $\mu$m, 22 $\mu$m, 23 $\mu$m, 24 $\mu$m, 25 $\mu$m, or 26 $\mu$m.

As the particle sizes of the primary and secondary particles increase, the specific surface area decreases, side reactions decreases, and the high-temperature performance of the lithium-ion battery improves.

In some embodiments of the present disclosure, a ratio A of the particle size Dv'90 of the secondary particles to the particle size Dv90 of the primary particles ranges from 1.2 to 2.0, for example, A is 1.2, 1.3, 1.4, 1.5, 1.6, 1.7, 1.8, 1.9, or 2.0.

In some embodiments of the present disclosure, both the primary particles and secondary particles are graphite materials.

In some embodiments of the present disclosure, the graphite comprises at least one of natural graphite or artificial graphite.

In some embodiments of the present disclosure, the natural graphite comprises natural flake graphite.

In some embodiments of the present disclosure, raw materials for artificial graphite comprise at least one of petroleum-derived needle coke, coal-derived needle coke, or mesocarbon microbeads.

In some embodiments of the present disclosure, the primary particles are any one selected from the group consisting of natural graphite and artificial graphite; and the secondary particles are formed from at least one selected from the group consisting of natural graphite and artificial graphite.

In some embodiments of the present disclosure, the secondary particles are formed from the same type of primary particles.

In some embodiments of the present disclosure, shape of the primary particles or secondary particles can be regular (e.g., spherical, near-spherical, elliptical, needle-like, plate-like, fibrous, flaky, etc.) or irregular.

It can be understood that the aforementioned primary particles and secondary particles can doped with oxygen on their surfaces through exposure to air, thereby resulting in a certain surface oxygen content. For example, this can be achieved by introducing a set amount of air or oxygen during processes such as ball milling or sintering to achieve a certain surface oxygen content.

The second aspect of the present disclosure provides a negative electrode sheet comprising a negative electrode current collector and a negative electrode active material layer formed on the negative electrode current collector, wherein raw materials for the negative electrode active material layer comprise the aforementioned negative electrode active material.

In some embodiments of the present disclosure, the raw materials for the negative electrode active material layer further include at least one of a conductive agent or a binder. The conductive agent includes, but is not limited to, conductive graphite (e.g., KS-6, KS-15, SFG-6, SFG-15, SO, etc.), conductive carbon black (e.g., Super P, Super S, 350G, acetylene black, Ketjenblack, etc.), conductive carbon fibers (e.g., VGCF, CNT), graphene, and the like. The binder includes, but is not limited to, at least one of polyvinylidene fluoride, polytetrafluoroethylene, carboxymethyl cellulose, styrene-butadiene rubber, polyurethane, polyvinyl alcohol, polyvinyl butyral, and the like.

In some embodiments of the present disclosure, the negative electrode active material layer comprises 70 wt% to 99 wt% of the negative electrode active material, 0.5 wt% to 6 wt% of the conductive agent, and 0.5 wt% to 20 wt% of the binder.

The third aspect of the present disclosure provides a lithium-ion battery comprising the aforementioned negative electrode sheet.

In some embodiments of the present disclosure, the lithium-ion battery comprises a positive electrode sheet, a negative electrode sheet, an electrolyte, and a separator.

In some embodiments of the present disclosure, the positive electrode sheet comprises a positive electrode current collector and a positive electrode active material layer located on the positive electrode current collector, wherein the positive electrode active material layer comprises positive electrode active materials, such as at least one of lithium cobalt oxide, lithium manganese oxide, lithium iron phosphate, lithium nickel cobalt manganese oxide, lithium nickel cobalt aluminum oxide, lithium nickel manganese aluminum oxide, and the like.

In some embodiments of the present disclosure, the positive electrode active material layer further comprises at least one of a conductive agent or a binder. The conductive agent includes, but is not limited to, at least one of conductive graphite (e.g., KS-6, KS-15, SFG-6, SFG-15, SO, etc.), conductive carbon black (e.g., Super P, Super S, 350G, acetylene black, Ketjenblack, etc.), conductive carbon fibers (e.g., VGCF, CNT), graphene, and the like. The binder includes, but is not limited to, at least one of polyvinylidene fluoride, polytetrafluoroethylene, carboxymethyl cellulose, styrene-butadiene rubber, polyurethane, polyvinyl alcohol, polyvinyl butyral, and the like.

In some embodiments of the present disclosure, the positive electrode active material layer comprises 70 wt% to 99 wt% of positive electrode active material, 0.5 wt% to 6 wt% of conductive agent, and 0.5 wt% to 20 wt% of binder.

In some embodiments of the present disclosure, preparing the positive electrode active material layer/negative electrode active material layer from the positive electrode active material/negative electrode active material, the conductive agent, and the binder comprises steps as follows: dispersing the positive electrode active material/negative electrode active material, the conductive agent, and the binder in a solvent, coating a resulting mixture onto the positive electrode current collector/ negative electrode current collector, and then drying to obtain the positive electrode active material layer/negative electrode active material layer.

In some embodiments of the present disclosure, the positive electrode current collector/ negative electrode current collector comprises at least one of a metal foil (such as an aluminum foil, a silver foil, a tin foil, an iron foil, a titanium foil, a nickel foil, a copper foil, or an alloy foil of the above metals) or a metal mesh (such as an aluminum mesh, a silver mesh, a tin mesh, an iron mesh, a titanium mesh, a nickel mesh, a copper mesh, or an alloy mesh of the above metals).

In some embodiments of the present disclosure, a battery cell is obtained by subjecting the positive electrode sheet, the negative electrode sheet, and the separator to at least one process including winding, stacking, and the like. The battery cell is then made into a lithium-ion battery.

In some embodiments of the present disclosure, the electrolyte can be at least one of a solid-state electrolyte or an electrolytic solution.

The fourth aspect of the present disclosure provides an electrical device comprising the aforementioned lithium-ion battery. Here, the electrical device refers to any device that can utilize electrical energy and convert it into one or more other forms of energy including mechanical energy, thermal energy, light energy, and the like, such as motors, electric heating devices, and electric light sources. The electrical device includes mobile devices, electric vehicles, electric trains, ships, satellites, energy storage systems, etc. Mobile devices can be smartphones, laptops, drones, robotic vacuum cleaners, e-cigarettes, etc. Electric vehicles can be pure electric vehicles, hybrid electric vehicles, plug-in hybrid electric vehicles, electric bicycles, electric scooters, electric golf carts, electric trucks, etc.

Additional aspects and advantages of the present disclosure will be partially presented in the following description, become apparent from the following description, or be understood through the practice of the present disclosure.

## DETAILED DESCRIPTION

The concept and technical effects of the present disclosure will be clearly and completely described as below with reference to the examples, so as to fully understand the purposes, characteristics and effects of the present disclosure. Obviously, the described examples are only a part of, not all of, the examples of the present disclosure. All other examples obtained by a person of ordinary skill in the art based on the examples of the present disclosure without creative effort shall fall into the protection scope of the present disclosure.

The examples of the present disclosure are described in detail as following. The described examples are illustrative and are only intended to explain the present disclosure and should not be understood as limitations on the present disclosure.

In the description of the present disclosure, the term "several" means one or more, while "multiple" means two or more. Terms such as "greater than", "smaller than", "less than" and "more than" are understood as not including the specified number, while "not less than ", " not more than", "within" etc., are understood as including the specified number.

The term "approximately" means within a range of $\pm 20\%$, $\pm 10\%$, $\pm 8\%$, $\pm 5\%$, $\pm 4\%$, $\pm 3\%$, $\pm 2\%$, $\pm 1\%$, $\pm 0.5\%$, $\pm 0.2\%$, $\pm 0.1\%$, etc., of the specified number. If terms such as "first", "second" are mentioned, they are used merely for the purpose of distinguishing technical features and should not be understood as indicating or implying relative importance or implying the quantity of the indicated technical features or implying the order of the indicated technical features.

In the description of the present disclosure, the reference terms "an embodiment", "some embodiments", "illustrative embodiments", "examples", "specific examples", or "some examples" etc., indicate that the specific features, structures, materials, or characteristics described in conjunction with the embodiments or examples are included in at least one embodiment or example of the present disclosure. In this specification, the illustrative representation of the above terms does not necessarily refer to the same embodiment or example. Moreover, the specific features, structures, materials, or characteristics described may be combined in any one or more embodiments or examples in a suitable manner.

The present disclosure will be explained in conjunction with specific examples.

## Example 1

This Example provided a negative electrode active material. The negative electrode active material was prepared by mixing primary particles and secondary particles, both of which were artificial graphite particles;

wherein the particle size Dv90 of the primary particles was 13 $\mu$m, and the surface oxygen content H1 was 2%;

the particle size Dv'90 of the secondary particles was 18 $\mu$m, and the surface oxygen content H2 was 5%.

The method for adjusting the surface oxygen content of the primary and secondary particles was as follows: 100 g of primary particles (or secondary particles) were placed in a reaction kettle, and air was introduced at 600 °C for reaction to obtain the primary particles (or secondary particles) with a specific surface oxygen content.

The mass percentage of the primary particles in the total mass of both was 30%, and the ratio A of the particle size Dv'90 of the secondary particles to the particle size Dv90 of the primary particles was 1.38.

The OI value r of the negative electrode active material was 16, the surface oxygen content H of the negative electrode active material was 4%, and 200H/Dv90 + 10 /r = 1.24.

The particle size Dv90 of the primary and secondary particles was obtained by measuring the particle size distribution using a laser diffraction particle size analyzer (Malvern Mastersizer 3000), according to the particle size distribution laser diffraction method, GB/T19077-2016.

The OI value was measured by XRD, according to the international standard JJS K 0131-1996 "General Principles of X-ray Diffraction Analysis", using an X-ray diffractometer (model Bruker D8 ADVANCE), with CuK$\alpha$ radiation, a voltage of 40 KV, a current of 40 mA, and a test angle from 20° to 80°, with a step time of 0.3s. The powder of the negative electrode active material was scanned to obtain the XRD spectrum, and the peak intensity I(004) of the (004) crystal plane diffraction peak C(004) and the peak intensity I(110) of the (110) crystal plane diffraction peak C(110) were analyzed to calculate the OI value of the negative electrode active material according to OI=I(004)/I(110).

The surface oxygen content of the negative electrode active material, as well as that of the primary and secondary particles, was measured using XPS.

This Example also provided a lithium-ion battery. The preparation process was as follows:

(1) Preparation of the negative electrode sheet

The aforementioned negative electrode active material, styrene-butadiene rubber as a binder, and sodium carboxymethyl cellulose as a dispersant were dissolved in deionized water in a mass ratio of 98:1:1. After stirring and mixing, a negative electrode slurry was obtained. The negative electrode slurry was uniformly coated onto a copper foil current collector, baked for 12 hours at 80 C under vacuum. Subsequently, the coated copper foil was subjected to cold pressing, edge trimming, cutting, and slitting to obtain the negative electrode sheet of the lithium-ion battery.

(2) Preparation of the positive electrode sheet

The positive electrode active material NCM523, acetylene black as a conductive agent, and polyvinylidene fluoride (PVDF) as a binder were mixed in a mass ratio of 97:2:1, a N-methylpyrrolidone (NMP) was added as a solvent, and a resulting mixture was stirred until a homogeneous positive electrode slurry was obtained with a vacuum stirrer. The positive electrode slurry was uniformly coated onto an aluminum foil current collector, air-dried at room temperature, then transferred to an oven for further drying. Subsequently, the dried aluminum foil was subjected to cold pressing, slitting and other steps to obtain the positive electrode sheet.

(3) Preparation of the electrolytic solution

Ethylene carbonate (EC), ethyl methyl carbonate (EMC), and diethyl carbonate (DEC) were mixed in a volume ratio of 1:1:1 to obtain an organic solvent. Subsequently, the fully dried lithium salt, $LiPF_6$ was dissolved in the organic solvent to prepare an electrolytic solution with a concentration of 1 mol/L.

(4) Preparation of the lithium-ion battery

The positive electrode sheet, the polyethylene separator, and the negative electrode sheet were stacked in order, with the separator positioned between the positive electrode and negative electrode sheets for isolation, and then wound to obtain a bare battery cell. The bare battery cell was placed in an outer packaging aluminum shell, dried, introduced with the electrolytic solution, and then subjected to the processes such as vacuum sealing, standing, formation, and shaping, to obtain the lithium-ion battery.

**Examples 2-13 and Comparative Examples 1-4**

Based on Example 1, the negative electrode active materials and lithium-ion batteries of Examples 2-13 and Comparative Examples 1-4 were provided, differing only in at least one of particle size, orientation degree, surface oxygen content, etc., as shown in Table 1 below. Furthermore, 100 g of primary particles or secondary particles were placed in a reaction kettle, and different gases were introduced at 600 °C respectively for reaction, with specific parameter settings shown in Table 2.

Table 1. Different parameters of primary particles and secondary particles in Examples and Comparative Examples.

| Group | 200H/d + 10/r | A | r | H | Primary Particles | | Secondary Particles | |
|---|---|---|---|---|---|---|---|---|
| | | | | | d | H1 | D | H2 |
| Example 1 | 1.24 | 1.38 | 16 | 4% | 13 | 2% | 18 | 5% |
| Example 2 | 1.55 | 1.38 | 16 | 6% | 13 | 4% | 18 | 7% |
| Example 3 | 1.86 | 1.38 | 16 | 8% | 13 | 6% | 18 | 9% |
| Example 4 | 2.16 | 1.38 | 16 | 10% | 13 | 8% | 18 | 11% |
| Example 5 | 1.28 | 1.85 | 15 | 4% | 13 | 2% | 24 | 5% |
| Example 6 | 1.09 | 1.26 | 15 | 4% | 19 | 2% | 24 | 5% |
| Example 7 | 1.14 | 1.37 | 14 | 4% | 19 | 2% | 26 | 5% |
| Example 8 | 1.38 | 1.38 | 13 | 4% | 13 | 2% | 18 | 5% |
| Example 9 | 1.62 | 1.38 | 10 | 4% | 13 | 2% | 18 | 5% |
| Example 10 | 2.04 | 1.38 | 7 | 4% | 13 | 2% | 18 | 5% |
| Example 11 | 2.66 | 1.38 | 7 | 8% | 13 | 6% | 18 | 9% |
| Example 12 | 2.97 | 1.38 | 7 | 10% | 13 | 2% | 18 | 13% |
| Example 13 | 3.18 | 1.63 | 7 | 14% | 16 | 10% | 26 | 15% |
| Comparative Example 1 | 1.74 | 1.00 | 16 | 10% | 18 | 8% | 18 | 11% |
| Comparative Example 2 | 1.05 | 1.38 | 23 | 4% | 13 | 2% | 18 | 5% |
| Comparative Example 3 | 3.58 | 2.00 | 7 | 14% | 13 | 10% | 26 | 15% |
| Comparative Example 4 | 3.39 | 1.38 | 16 | 18% | 13 | 13% | 18 | 20% |

Table 2. Control of surface oxygen content of particles

| Group | Time for Introducing Gas (s) | | Gas Type | |
|---|---|---|---|---|
| | Primary Particles | Secondary Particles | Primary Particles | Secondary Particles |
| Example 1 | 16 | 26 | Air | Air |
| Example 2 | 22 | 36 | Air | Air |

(continued)

| Group | Time for Introducing Gas (s) | | Gas Type | |
|---|---|---|---|---|
| | Primary Particles | Secondary Particles | Primary Particles | Secondary Particles |
| Example 3 | 30 | 50 | Air | Air |
| Example 4 | 42 | 10 | Air | Oxygen |
| Example 5 | 16 | 26 | Air | Air |
| Example 6 | 16 | 26 | Air | Air |
| Example 7 | 16 | 26 | Air | Air |
| Example 8 | 16 | 26 | Air | Air |
| Example 9 | 16 | 26 | Air | Air |
| Example 10 | 16 | 26 | Air | Air |
| Example 11 | 30 | 50 | Air | Air |
| Example 12 | 16 | 12 | Air | Oxygen |
| Example 13 | 8 | 15 | Oxygen | Oxygen |
| Comparative Example 1 | 42 | 10 | Air | Oxygen |
| Comparative Example 2 | 16 | 26 | Air | Air |
| Comparative Example 3 | 8 | 15 | Oxygen | Oxygen |
| Comparative Example 4 | 10 | 20 | Oxygen | Oxygen |

The performance of the negative electrode sheets and lithium-ion batteries of the Examples and Comparative Examples was tested using the following methods:

(1)

$$\text{Energy Density (Wh/kg)} = \text{First Discharge Capacity (Wh) / Lithium-ion Battery Mass (kg).}$$

(2) Temperature Coefficient Test: At 25 °C, the lithium-ion battery was discharged at 0.2C and fully charged at 0.5C, then discharged to 3.0V, recording the discharge capacity as C1. The battery cell was then fully charged at 0.5C and then the lithium-ion battery was moved to an environment at 45 °C, where it was discharged at 0.2C to 3.0V, recording the discharge capacity as C2. The temperature coefficient = C1/C2 × 100%.

(3) High-Temperature Storage Performance Test: At 25 °C, the lithium-ion battery was fully charged at 5C and fully discharged at 1C once, then fully charged at 5C. The thickness of the battery cell was measured using a 500 PPG battery thickness gauge as the initial thickness D1. The lithium-ion battery was then placed in a 60 °C oven for 30 days, and the thickness of the battery cell was measured again using the 500 PPG battery thickness gauge as D2. The thickness swelling rate (%) = (D2-D1)/D1 × 100%.

The results were shown in Table 3.

Table 3. Performance testing results of Examples and Comparative Examples

| Group | Energy Density (Wh/kg) | Temperature Coefficient (%) | Thickness Swelling Rate (%) |
|---|---|---|---|
| Example 1 | 752 | 96.0% | 8.2% |
| Example 2 | 754 | 97.5% | 8.9% |
| Example 3 | 756 | 98.3% | 9.1% |
| Example 4 | 756 | 98.5% | 9.8% |
| Example 5 | 749 | 96.9% | 8.1% |

(continued)

| Group | Energy Density (Wh/kg) | Temperature Coefficient (%) | Thickness Swelling Rate (%) |
|---|---|---|---|
| Example 6 | 750 | 96.5% | 7.3% |
| Example 7 | 749 | 96.7% | 7.1% |
| Example 8 | 751 | 96.3% | 8.5% |
| Example 9 | 750 | 97.2% | 8.3% |
| Example 10 | 749 | 97.8% | 8.4% |
| Example 11 | 752 | 98.8% | 9.5% |
| Example 12 | 754 | 99.2% | 9.7% |
| Example 13 | 750 | 99.3% | 10.8% |
| Comparative Example 1 | 732 | 95.2% | 8.2% |
| Comparative Example 2 | 752 | 94.0% | 8.1% |
| Comparative Example 3 | 748 | 99.6% | 31.1% |
| Comparative Example 4 | 692 | 93.8% | 48.6% |

The analysis of the above Comparative Examples and Examples reveals that, compared to Example 4, the difference in particle size between the primary particles and secondary particles in Comparative Example 1 is smaller. This results in poor compatibility, leading to reduced energy density (ED). The increase in particle size of the primary particles leads to longer lithium intercalation paths, which significantly reduces the energy density of battery and deteriorates the kinetic performance, while decreases the temperature coefficient and improves the high-temperature storage performance. Compared to Example 1, the OI value in Comparative Example 2 is excessively high, with the orientation of the graphite particles being too clear, resulting in fewer lithium intercalation end faces and a decline in the temperature coefficient of the lithium-ion battery. Compared to Example 13, all parameters in Comparative Example 3 fall within the respective ranges but do not meet the range requirements of the formula 200H/d + 10/r. The small particle size and strong oxidative etching lead to severe side reactions during battery operation, significantly deteriorating high-temperature storage performance. Compared to Example 1, the excessive etching of primary particles and excessive oxidative etching of secondary particles in Comparative Example 4 result in an excessively high surface oxygen content of the negative electrode active material, causing port collapse and deteriorating charge-discharge capabilities; moreover, the excessive oxidation exacerbates side reactions, which also leads to significant deterioration in high-temperature storage performance.

Comparisons among Examples 1-4 shows that, as the surface oxygen content of the negative electrode active material, primary particles, and secondary particles gradually increases, the degree of oxidative etching deepens. During the oxidative etching process, the low crystalline regions are oxidized away, which can enhance the overall gram capacity and compaction density, and increase ports. This leads to a gradually increase in energy density and temperature coefficient of the battery. However, the high-temperature storage performance gradually declines, and the thickness swelling rate increases.

The comparison between Example 1 and Example 5 shows that, as the particle size of the secondary particles increases, the demand for binder increases, leading to a reduction in capacity and energy density. However, the increase in the end faces improves kinetic performance, and enhances the temperature coefficient. The comparison between Example 5 and Example 6 shows that, the increase in particle size of the primary particles leads to deteriorated kinetic performance and a reduced temperature coefficient, however, the capacity increases, and the energy density rises. The effects of changes compensate for each other between the primary and secondary particles.

Comparisons among Example 1 with Examples 8-10 shows that, as the OI value of the negative electrode active material gradually decreases, the energy density of the battery gradually declines, while the temperature coefficient gradually increases. However, the high-temperature storage performance also gradually declines, and the thickness swelling rate increases. The reasons may be as follows: the granulation process reduces the OI value of the negative electrode active material but correspondingly increases the specific surface area, which leads to an increase in lithium intercalation end faces and exacerbates side reactions, thereby weakening the high-temperature storage performance. Additionally, the introduction of trace amounts of binder during the granulation process leads to reduced gram capacity, and thereby reducing the energy density.

Comparisons among Example 1 and Examples 11-12 shows that, changes in the surface oxygen content of the primary and secondary particles result in a gradual increase in the overall surface oxygen content of the negative electrode active material. The formula 200H/Dv90 + 10/r remains within the limited range. By reducing the low crystalline regions of the negative electrode active material through oxidative etching, the overall gram capacity and compaction density are enhanced, compensating for the capacity loss due to granulation. Ultimately, the energy density and temperature coefficient increase, and the high-temperature storage performance declines but remains acceptable. In Example 13, both the primary and secondary particles are directly etched with oxygen, resulting in shorter etching times and higher surface oxygen content. The increased oxidation degree, combined with medium-sized primary and secondary particles, increases the temperature coefficient without significantly exacerbating side reactions.

The present disclosure has been described in detail hereinabove in conjunction with the examples, but the present disclosure is not limited to the above examples. Various changes can be made within the knowledge of those skilled in the art without departing from the purpose of the present disclosure. In addition, the examples of the present disclosure and the features therein can be combined with each other in cases where there is no conflict.

**Claims**

1. A negative electrode active material comprising primary particles and secondary particles;

   wherein a mass percentage t of the primary particles in a total mass of the primary particles and the secondary particles is not more than 30%;
   a particle size Dv90 of the primary particles ranges from 13 $\mu$m to 20 $\mu$m, and a particle size Dv'90 of the secondary particles ranges from 18 $\mu$m to 26 $\mu$m, and greater than the particle size Dv90 of the primary particles.

2. The negative electrode active material according to claim 1, wherein an OI value r of the negative electrode active material satisfies 6 < r < 17.

3. The negative electrode active material according to claim 2, wherein a mass percentage H of a surface oxygen content of the negative electrode active material satisfies 200 H/Dv90 + 10/r < 3.2, where Dv90 is a dimensionless value without a unit of $\mu$m when calculated.

4. The negative electrode active material according to claim 3, wherein a mass percentage H1 of a surface oxygen content of the primary particles ranges from 0% to 10%; and/or,
   a mass percentage H2 of a surface oxygen content of the secondary particles ranges from 5% to 15%.

5. The negative electrode active material according to claim 1 or 4, wherein the mass percentage H of the surface oxygen content of the negative electrode active material ranges from 4% to 15%.

6. The negative electrode active material according to claim 1, wherein a ratio A of the particle size Dv'90 of the secondary particles to the particle size Dv90 of the primary particles ranges from 1.2 to 2.0.

7. The negative electrode active material according to claim 1, wherein the primary particles are any one selected from the group consisting of natural graphite and artificial graphite; and the secondary particles are formed from at least one selected from the group consisting of natural graphite and artificial graphite.

8. A negative electrode sheet comprising a negative electrode current collector and a negative electrode active material layer formed on the negative electrode current collector, wherein raw materials for the negative electrode active material layer comprise the negative electrode active material of any one of claims 1 to 7.

9. A lithium-ion battery comprising the negative electrode sheet of claim 8.

10. An electric device comprising the lithium-ion battery of claim 9.

## INTERNATIONAL SEARCH REPORT

| International application No. |
|---|
| **PCT/CN2024/111082** |

| A. | CLASSIFICATION OF SUBJECT MATTER |
|---|---|

H01M 4/587(2010.01)i; H01M4/133(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC/CPC:H01M4/-,H01M10/-

Documentation searched other than minimum documentation to the extent that such documents are included in the fields searched

Electronic data base consulted during the international search (name of data base and, where practicable, search terms used)

CNTXT, ENTXTC, VEN, CJFD: 负极, 阳极, 石墨, 一次颗粒, 一次粒子, 单颗粒, 二次粒子, 二次颗粒, 粒径, 尺寸, D90, DV90, 质量百分比, 质量比, 质量含量, 质量分数, 重量百分比, 重量比, 重量含量, 重量分数, wt%, OI, XPS, 氧化, andoe, negative electrode, primary particle?, secondary particle?, particle diameter, particle size, mass percentage, mass ratio, mass content, mass fraction, oxidation

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116387448 A (CHUNENG NEW ENERGY CO., LTD.) 04 July 2023 (2023-07-04) description, paragraphs 35-61 | 1, 6-10 |
| Y | CN 116387448 A (CHUNENG NEW ENERGY CO., LTD.) 04 July 2023 (2023-07-04) description, paragraphs 35-61 | 2-5 |
| Y | CN 117558917 A (BTR NEW MATERIAL GROUP CO., LTD.) 13 February 2024 (2024-02-13) description, paragraphs 6-20 | 2-5 |
| Y | CN 115818637 A (CONTEMPORARY AMPEREX TECHNOLOGY CO., LTD.) 21 March 2023 (2023-03-21) description, paragraphs 7-16 | 3-5 |
| Y | CN 115939310 A (TIANJIN EV ENERGIES CO., LTD.) 07 April 2023 (2023-04-07) description, paragraphs 7-23 and 73 | 2-5 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 February 2025** | **12 February 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 700 866 A1**

### INTERNATIONAL SEARCH REPORT

International application No.

**PCT/CN2024/111082**

**C.   DOCUMENTS CONSIDERED TO BE RELEVANT**

| Category* | Citation of document, with indication, where appropriate, of the relevant passages | Relevant to claim No. |
|---|---|---|
| Y | CN 107651663 A (NINGBO INSTITUTE OF MATERIAL TECHNOLOGY AND ENGINEERING, CHINESE ACADEMY OF SCIENCES) 02 February 2018 (2018-02-02) description, paragraphs 7 and 23 | 3-5 |
| Y | KR 20230009260 A (SAMSUNG ELECTRONICS CO., LTD.) 17 January 2023 (2023-01-17) description, paragraphs 8-18 and 28-31 | 3-5 |
| A | CN 112614976 A (EVE ENERGY CO., LTD.) 06 April 2021 (2021-04-06) entire description | 1-10 |
| A | CN 112670466 A (NINGBO SHANSHAN NEW MATERIAL TECHNOLOGY CO., LTD.) 16 April 2021 (2021-04-16) entire description | 1-10 |
| A | WO 2024080759 A1 (LG ENERGY SOLUTION LTD.) 18 April 2024 (2024-04-18) entire description | 1-10 |

Form PCT/ISA/210 (second sheet) (July 2022)

12

## INTERNATIONAL SEARCH REPORT
### Information on patent family members

International application No.

**PCT/CN2024/111082**

| Patent document cited in search report | | | Publication date (day/month/year) | Patent family member(s) | Publication date (day/month/year) |
|---|---|---|---|---|---|
| CN | 116387448 | A | 04 July 2023 | None | |
| CN | 117558917 | A | 13 February 2024 | None | |
| CN | 115818637 | A | 21 March 2023 | None | |
| CN | 115939310 | A | 07 April 2023 | None | |
| CN | 107651663 | A | 02 February 2018 | None | |
| KR | 20230009260 | A | 17 January 2023 | None | |
| CN | 112614976 | A | 06 April 2021 | None | |
| CN | 112670466 | A | 16 April 2021 | None | |
| WO | 2024080759 | A1 | 18 April 2024 | None | |

Form PCT/ISA/210 (patent family annex) (July 2022)